# EUROPÄISCHE PATENTSCHRIFT

(11) **EP 1 979 207 B1**
(45) Veröffentlichungstag und Bekanntmachung des Hinweises auf die Patenterteilung: **29.09.2010**
(21) Anmeldenummer: 07703021.1
(22) Anmeldetag: 25.01.2007
(51) Int. Cl.: B60S 1/40, B60S 1/34

(54) **WISCHARM**
WIPER ARM
BRAS D'ESSUIE-GLACE

(30) Priorität: 28.01.2006 DE 102006004110
(43) Veröffentlichungstag der Anmeldung: 15.10.2008
(73) Patentinhaber: VALEO SYSTEMES D'ESSUYAGE, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Jahn, Wolf-Diethart
(86) Internationale Anmeldenummer: PCT/EP2007/000628
(87) Internationale Veröffentlichungsnummer: WO 2007/085447

(56) Entgegenhaltungen:
- DE-A1- 10 311 783
- US-A- 3 431 579
- US-A1- 2005 251 946

## Beschreibung

Die Erfindung bezieht sich auf einen Wischarm gemäß Oberbegriff Patentanspruch 1.

Wischarme mit einem an einem Wischarmende vorgesehenen Wischblattadapter zum lösbaren Befestigen eines Wischblattes sind in verschiedensten Ausführungen bekannt. Vielfach verwendet sind auch Wischarme, die im Wesentlichen aus einem im Querschnitt rechteckförmigen stangenartigen Wischarmelement bzw. Wischarmstange bestehen, welche an einem Ende den Wischblattadapter aufweist und an dem anderen Ende über ein, z.B. wenigstens teilweise U-profilförmiges, Gelenkteil gelenkig mit einem an einer Wischerwelle befestigbaren Gelenkträger verbunden sind. Wischarme dieser Art besitzen trotz eines kleinen Stangenquerschnitts in Wischrichtung eine ausreichende Steifigkeit, so dass sie die sich zumindest teilweise widersprechenden Forderungen nach möglichst hoher Steifigkeit, nach möglichst geringem Gewicht und nach möglichst optimalen Sichtbedingungen in besonders vorteilhafter Weise erfüllen.

Bekannt sind weiterhin Wischarme, deren Wischarmstangen von einem vollen Rundmaterial (US 1 942 661) oder von einem Rohrprofil gebildet sind (EP 0 566 471), wobei diese Wischarme allerdings u.a. die Erfordernisse hinsichtlich Steifigkeit, Gewichtsverhältnis und möglichst optimale Sichtbedingungen nicht oder nur unzureichend erfüllen.

US 2005/0 251 946 offenbart den Oberbegriff des Anspruchs 1.

Der Erfindung liegt die Aufgabe zugrunde, einen Wischarm aufzuzeigen, der an seinem den Wischblattadapter aufweisenden Ende einen von der Kreisform abweichenden Querschnitt, nämlich bevorzugt einen rechteckförmigen oder U-profilförmigen Querschnitt, besitzt und der preiswert mit hoher Präzision insbesondere auch hinsichtlich der Orientierung des Wischblattadapters gefertigt werden kann. Zur Lösung dieser Aufgabe ist ein Wischarm entsprechend dem Patentanspruch 1 ausgebildet.

Im Gegensatz zu bekannten Wischarmen ist der Wischblattadapter bei dem erfindungsgemäßen Wischarm nicht unmittelbar an dem stangenartigen, im Querschnitt rechteckigen oder U-förmigen, Wischarmstange befestigt, sondern über eine Verbindung, die wenigstens ein Verbindungsstück aufweist, das an seiner Außenfläche um eine sich zwischen dem Wischarm und dem Wischblattadapter erstreckende Achse rotationssymmetrisch ausgebildet und von einem mit dem Wischblattadapter oder mit dem stangenartigen Wischarmstange verbundenen Element der Verbindung umgriffen ist. Hierdurch ist bei der Herstellung des Wischarmes durch Drehen des Wischblattadapters um die Achse des Verbindungsstücks und/oder durch axiales Verschieben in Richtung dieser Achse ein einfaches Justieren bzw. Ausrichten des Wischblattadapters möglich. Nach diesem Ausrichten werden das Verbindungsstück und das dieses Verbindungsstück umgebende Element der Verbindung verdrehungssicher aneinander fixiert, und zwar beispielsweise durch Verpressen oder Crimpen, Kleben oder auf andere geeignete Weise.

Das Verbindungsstück, welches ein Zapfen oder Bolzen mit einer kreiszylinderförmigen Umfangsfläche ist, ist am Wischarmelement und/oder an dem Wischblattadapter beispielsweise durch eine Verbindungshülse oder aber dadurch gehalten, dass das Verbindungsstück in einem beispielsweise durch bleibende Materialverformung (z.B. Crimpen) erzeugten Bereich des stangenartigen Wischarmelementes oder des Wischblattadapters aufgenommen ist. Auch andere Arten der Befestigung sind möglich. Insbesondere ist es möglich, das Verbindungsstück einstückig mit dem Wischblattadapter zu fertigen.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: und 2 den Wischarm sowie das an diesem befestigte Wischblatt einer ansonsten nicht dargestellten Scheibenwischeranlage für Fahrzeuge, insbesondere Straßenfahrzeuge, in Seitenansicht sowie in Draufsicht;
- Fig. 3: das Wischarmende zusammen mit dem über ein Verbindungsstück angeschlossenen Wischblattadapter;
- Fig. 4: einen Schnitt entsprechend der Linie I-I der Figur 3;
- Fig. 5: einen Schnitt entsprechend der Linie II - II der Figur 3;
- Fig. 6: einen Schnitt entsprechend der Linie III - III der Figur 3;
- Fig. 7: in einer Darstellung ähnlich der Figur 3 das Wischarmende zusammen mit dem Verbindungsstück bei einer weiteren möglichen Ausführungsform;
- Fig. 8: eine Darstellung wie Figur 3 bei einer weiteren Ausführungsform;
- Fig. 9: einen Schnitt entsprechend der Linie IV - IV der Figur 8;
- Fig. 10: einen Schnitt entsprechend der Linie V - V der Figur 8;
- Fig. 11: eine Darstellung ähnlich Figur 3 bei einer weiteren Ausführungsform;
- Fig. 12: einen Schnitt entsprechend der Linie VI - VI der Figur 11;
- Fig. 13: einen Schnitt entsprechend der Linie VII - VII der Figur 11;
- Fig. 14 und 15: jeweils in Darstellungen ähnlich Figur 11 bei weiteren Ausführungsformen der Erfindung.

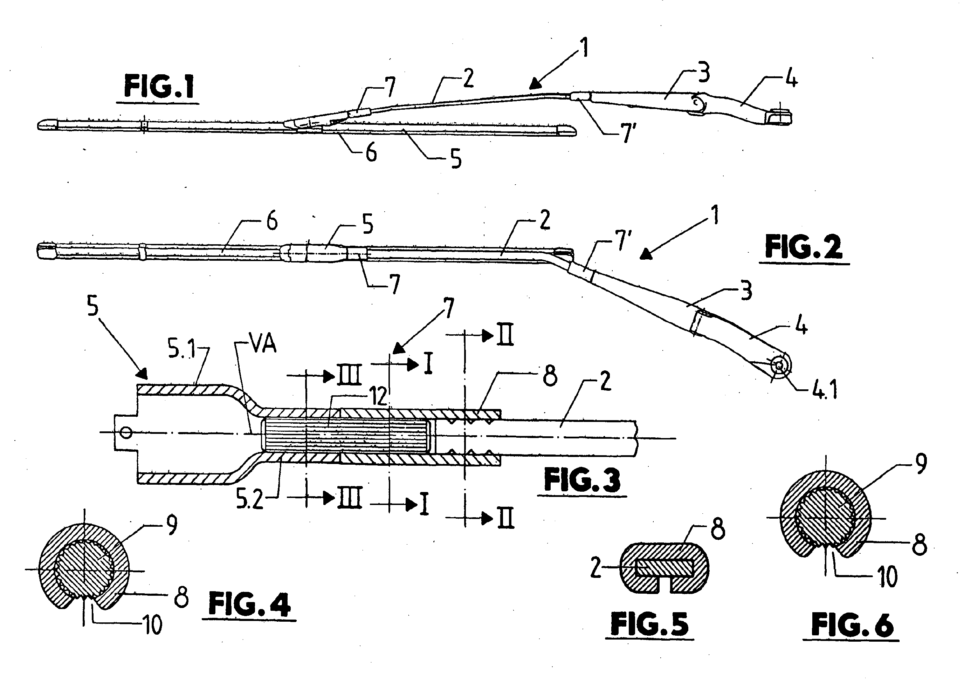

In den Figuren 1 - 6 ist 1 ein Wischarm einer Scheibenwischeranlage für Straßenfahrzeuge dargestellt. Dieser Wischarm 1 besteht u.a. aus der Wischarmstange 2, die aus einem flachen, bandförmigen Material aus Stahl gefertigt ist und einen rechteckförmigen Querschnitt aufweist. An dem einen Ende der Wischarmstange 2 ist in üblicher Weise ein Gelenkteil 3 befestigt, welches beispielsweise aus Stahlblech mit einem im Wesentlichen U-förmigen Profil hergestellt ist und über welches die Wischarmstange 2 mit einem Gelenkträger 4 gelenkig verbunden ist, der bei montiertem Wischarm 1 mit einer Öffnung 4.1 auf der nicht dargestellten Wischerwelle befestigt ist. An dem anderen Ende der Wischarmstange 2 ist ein Wischblattadapter 5 mit dem an diesen Adapter auswechselbar vorgesehenen Wischblatt 6 befestigt, welches bei dieser Ausführung als Flach-Wischblatt ausgebildet ist. Insoweit entspricht der Wischarm 1 einschließlich Wischarmadapter 5 und Wischblatt 6 grundsätzlich der bei Scheibenwischeranlagen bekannten Ausbildung.

Die Besonderheit des Wischarmes 1 besteht darin, dass der Wischblattadapter 5 nicht unmittelbar an der Wischarmstange 2 befestigt ist, sondern über eine Verbindung, welche in den Figuren 1 - 3 allgemein mit 7 bezeichnet ist und welche bei der dargestellten Ausführungsform aus einer Verbindungshülse 8 und einem Bolzen 9 als Verbindungsstück jeweils aus Metall, beispielsweise aus Stahl besteht. Die Verbindungshülse 8 ist mit einem durchgehenden Längsschlitz 10 beispielsweise durch Rollen des metallischen Flachmaterials (z.B. Stahlblech) hergestellt. Der Bolzen 9 ist an seiner Außenfläche mit einer Rändelung oder mit einer sich in Bolzenlängsrichtung erstreckenden Profilierung beispielsweise in Form von Vorsprüngen und dazwischen liegenden Kerben versehen. Der Wischblattadapter 5 ist bei dieser Ausführungsform ebenfalls aus Metallblech mit einem das Wischblatt 6 bzw. ein dort befestigtes Adapterelement übergreifenden und gelenkig mit diesem Adapterelement verbundenen U-Profilabschnitt 5.1 sowie mit einem ursprünglich C-förmigen Profilabschnitt 5.2 geringerer Breite ausgeführt.

Zum Verbinden des Wischblattadapters 5 mit der Wischarmstange 2 wird der Bolzen 9 mit einer Teillänge in das eine Ende der Verbindungshülse 8 so eingeführt, dass er mit einer Teillänge über dieses Ende vorsteht und nur eine Teillänge der Verbindungshülse 8 einnimmt. Anschließend wird die Verbindungshülse 8 mit ihrem anderen Ende auf das mit den Wischblattadapter 5 zu verbindende Ende der Wischarmstange 2 aufgeschoben. Durch bleibende Verformung (z.B. Crimpen) der Verbindungshülse 8 wird der Bolzen 9 mit der Wischerstange 2 verbunden. Der an die Wischerstange 2 anschließende Bolzen 9 ist dann achsgleich mit der Achse des Wischerstangenendes angeordnet. Um eine besonders feste Verbindung zwischen der Verbindungshülse 8 und der Wischerstange 2 zu erreichen, ist diese an ihrem Ende mit einer Profilierung, beispielsweise in Form von Einkerbungen, 12 versehen. Nach dem Befestigen des Bolzens 9 an der Wischerstange 2 erfolgt die Befestigung des Wischblattträgers 5 am Bolzen 9, und zwar durch Umlegen der Schenkel des Profilabschnittes 5.2 um den Bolzen 9.

Die Figuren 4 und 5 zeigen die Ausbildung der Verbindung zwischen der Verbindungshülse 8 und dem Bolzen 9 bzw. der Wischarmstange 2. Die Figur 6 zeigt die Ausbildung der Verbindung zwischen dem Bolzen 9 und dem Wischblattadapter 5.

Bei dieser Montage besteht die Möglichkeit, den Wischblattadapter 5 auch bei mehrfach gekrümmter Wischarmstange 2 durch Drehen um die Achse des Bolzens 9 bzw. die Verbindungsstückachse VA sowie auch durch axiales Verschieben auf dem Bolzen problemlos auszurichten, beispielsweise in Bezug auf die Achse der Bohrung oder Öffnung 4.1 im Gelenkträger 4. Der Wischarm 1 mit Wischblattadapter 5 kann daher mit sehr geringen Toleranzen gefertigt werden, und zwar insbesondere auch dann, wenn beispielsweise zur Reduzierung der Produktionskosten bei der Herstellung und Montage des aus der Wischarmstange 2, aus dem Gelenkteil 3 und aus dem Gelenkträger 4 bestehenden Teils des Wischarmes 1 größere Toleranzen zugelassen werden. Mit der Verbindung 7 ist insbesondere eine Einstellung und damit ein Toleranzausgleich möglich.

Die Verbindung 7 bietet weiterhin die Möglichkeit unterschiedliche, beispielsweise dem jeweiligen Kundenwunsch entsprechende Wischblattadapter an ein und demselben Wischarm 1 vorzusehen, und zwar unter Beibehaltung einer einheitlichen Fertigung für den aus der Wischblattstange 2, dem Gelenkstück 3 und dem Gelenkträger 4 bestehenden Teil des Wischarmes 1.

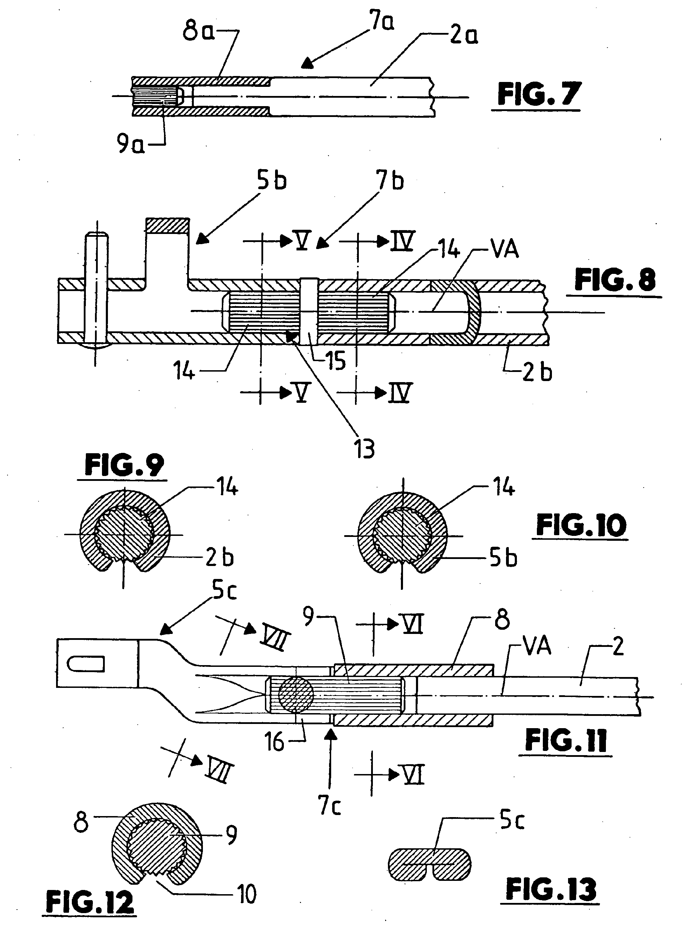

Die Figur 7 zeigt in einer Darstellung wie Figur 3 eine Verbindung 7a, welche wiederum aus einer der Verbindungshülse 8 entsprechenden Verbindungshülse 8a und aus einem dem Bolzen 9 entsprechenden Bolzen 9a besteht. Bei dieser Ausführung ist die Wischarmstange 2a an ihrem Ende in der Breite reduziert, so dass die befestigte Verbindungshülse 8a in Draufsicht auf die Wischarmstange 2a nicht über deren Längs- oder Schmalseiten vorsteht und sich dadurch ein optisch besonders ansprechendes Erscheinungsbild ergibt. Auch bei dieser Ausführungsform weist das von der Verbindungshülse 8a umschlossene Ende der Wischarmstange 2a einen von der Kreisform abweichenden Querschnitt, nämlich einen leicht rechteckförmigen oder zumindest quadratischen Querschnitt auf.

Die Figuren 8 - 10 zeigen eine Ausführungsform, bei der die Wischarmstange 2b bzw. der diese Stange bildenden Teil des Wischarmes einen U-förmigen Querschnitt besitzt und der Wischblattadapter 5b über die Verbindung 7b an das Ende der Wischarmstange 2b angeschlossen ist. Das Verbindungsstück ist bei dieser Ausführungsform ein Bolzen 13 mit zwei Bolzenabschnitten 14 gleicher axialer Länge und mit einem zwischen diesen Bolzenabschnitten gebildeten Bund 15. Beide Bolzenabschnitte weisen wiederum die Rändelung oder Profilierung 11 auf. Bei der Herstellung werden der Bolzen 13 bzw. ein Bolzenabschnitt 14 durch bleibende Verformung bzw. Umlegen der Schenkel der Wischarmstange 2b, d.h. z.B. durch Crimpen an dieser Stange befestigt (Fig. 9), und zwar in der Form, dass der Bund 15 gegen das Ende der Wischarmstange 2b anliegt. Auf dem anderen Bolzenabschnitt 14 wird dann der Wischblattadapter 5b ebenfalls durch bleibende Verformung der Schenkel seines U-Profils oder C-Profils, d.h. durch Crimpen befestigt (Figur 10).

Die Wischarmstange 2b und der Wischblattadapter 5b sind wiederum aus Metallblech bzw. Stahlblech gefertigt.

Die Figuren 11 - 13 zeigen nochmals eine Ausführungsform, bei der an der aus dem bandförmigen Flachmaterial gefertigten Wischarmstange 2 über die von der Verbindungshülse 8 und dem Bolzen 9 gebildete Verbindung 7c ein Wischblattadapter 5c in Form eines sogenannten Hakens für ein nicht dargestelltes Bügel-Wischblatt befestigt ist. Der Wischblattadapter 5c ist aus Metallblech durch Stanzen und Biegen hergestellt, und zwar mit einem zunächst C-förmigen Profilabschnitt 16, mit dem der Wischblattadapter 5c dann durch bleibende Verformung dieses C-Profilabschnittes (z.B. Crimpen) an dem aus der Verbindungshülse 8 vorstehenden Ende des Bolzens 9 befestigt wird.

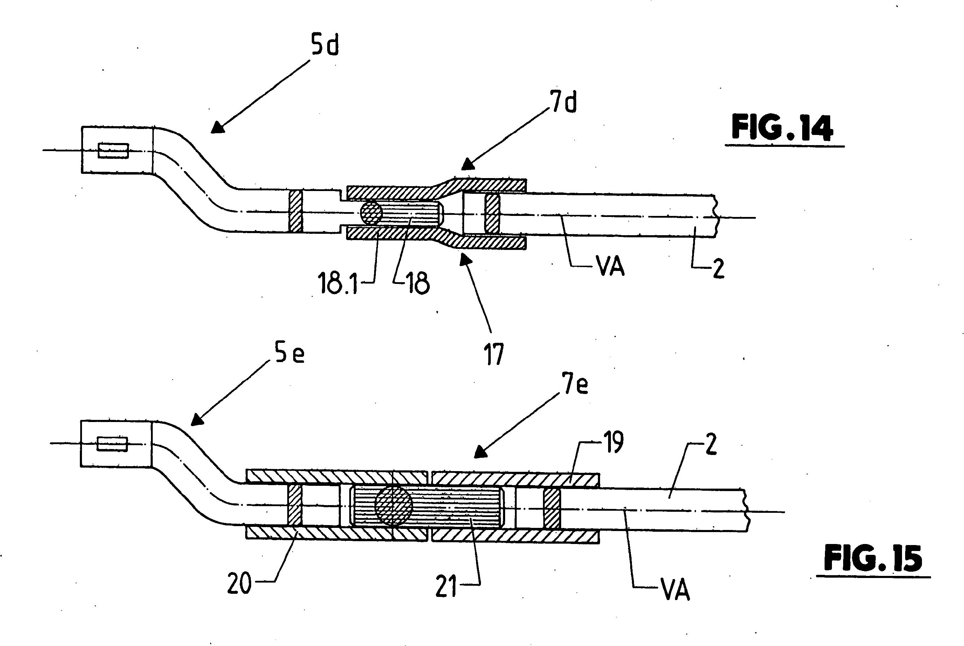

Die Figur 14 zeigt in einer ähnlichen Darstellung wie Figur 11 als weitere Ausführungsform eine Verbindung 7d zum Verbinden des Wischblattadapters 5d mit der Wischarmstange 2. Das Verbindungsstück ist bei dieser Ausführungsform von einem von der Verbindungshülse 17 umgriffenen bolzenförmigen Abschnitt 18 des Wischblattadapters 5d gebildet. Die Verbindungshülse 17 ist beispielsweise entsprechend der Verbindungshülse 8 ausgebildet, und zwar wiederum durch Rollen aus Stahlblech. Der Wischarmadapter 5d ist bei dieser Ausführungsform als Formteil aus einem geeigneten Material, beispielsweise als Spritzgussteil aus Metall oder aber als Spritzgießteil aus einem geeigneten Werkstoff gefertigt und wiederum als sogenannter "Haken" zur lösbaren Befestigung eines nicht dargestellten Bügelwischblattes ausgeführt. An seinem über die Verbindung 7d mit der Wischarmstange 2 zu verbindenden Ende ist der Wischblattadapter 5d mit dem Abschnitt 18 mit kreiszylinderförmigen Querschnitt ausgeführt, der an seiner Außenfläche mit einer der Rändelung oder Profilierung 11 entsprechenden Längsprofilierung versehen ist. Die Montage erfolgt bei dieser Ausführung z.B. so, dass zunächst die Hülse 17 durch bleibende Verformung oder Crimpen an der Wischarmstange 2 befestigt wird. Anschließend erfolgt dann die Montage des Wischblattadapters 5d durch Einführen des Abschnittes 18 in den von der Wischarmstange 2 nicht eingenommenen Teil der Verbindungshülse 17 und durch Verpressen (Crimpen) der Verbindungshülse 17 auf dem Abschnitt 18.

Die Figur 15 zeigt als weitere Ausführungsform eine Verbindung 7e zum Verbinden der Wischarmstange 2 mit einem beispielsweise aus einem metallischen Flachmaterial (z.B. Stahlblech) durch Stanzen und Biegen hergestellten und als sogenannter Haken ausgebildeten Wischblattadapter 5e. Die Verbindung 7e besteht bei dieser Ausführungsform aus zwei der Verbindungshülse 8 entsprechenden Verbindungshülsen 19 und 20 und dem den Bolzen 9 entsprechenden Bolzen 21. Bei der Montage werden beispielsweise an der Wischarmstange 2 zunächst die Verbindungshülse 19 und der Bolzen 21 durch Verpressen (Crimpen) derart montiert, dass der in der Verbindungshülse 19 gehaltene Bolzen 21 mit einer Teillänge aus der Verbindungshülse 19 vorsteht. Anschließend erfolgt das Verbinden des Bolzens 21 und des Wischblattadapters 5e über die Verbindungshülse 20 durch Verpressen dieser Hülse.

Auch bei den Ausführungen der Figuren 7 - 14 ist durch den kreiszylinderförmigen Querschnitt des jeweiligen Verbindungsstücks ein Justieren bzw. Ausrichten des jeweiligen Wischblattadapters durch Drehen um die Achse des Verbindungsstücks und/oder durch axiales Verschieben möglich.

Die Erfindung wurde voranstehend an verschiedenen Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

So wurde vorstehen davon ausgegangen, dass die Verbindungshülsen 8, 8a, 17, 19, 20 jeweils aus einem metallischen Material bestehen und durch bleibende Verformung bzw. Verpressen auf den zu verbindenden Elementen fixiert sind. Grundsätzlich besteht auch die Möglichkeit, derartige Verbindungshülse aus einem Kunststoff zu fertigen und in geeigneter Weise an den zu verbindenden Elementen zu fixieren, beispielsweise durch Verkleben.

Weiterhin ist es beispielsweise möglich, das jeweilige Verbindungsstück zumindest auf einer Teillänge leicht kegelförmig auszubilden, wie dies in der Figur 14 mit der unterbrochenen Linie 18.1 angedeutet ist.

Weiterhin ist es beispielsweise auch möglich, anstelle der Verbindung 7, 7a - 7e oder aber zusätzlich zu dieser eine entsprechende Verbindung zwischen der Wischstange und dem Gelenkstück 3 vorzusehen, wie dies in den Figuren 1 und 2 mit 7' angedeutet ist. Allerdings ist die Ausführung mit einer Verbindung 7, 7a - 7e oder einer ähnlichen Verbindung nur an dem wischblattseitigen Ende des Wischarmes, d.h. zwischen dem Wischarmelement bzw. der Wischarmstange und dem Wischblattadapter schon aus Festigkeitsgründen die bevorzugte Ausgestaltung der Erfindung.

### Bezugszeichenliste

- 1: Wischarm
- 2, 2a, 2b: Wischarmstange
- 3: Gelenkstück
- 4: Gelenkträger
- 4.1: Befestigungsöffnung für Wischerwelle
- 5, 5b, 5c, 5d, 5e: Wischblattträger
- 6: Wischblatt
- 7, 7', 7a, 7b, 7c, 7d, 7e: Verbindung
- 8: Verbindungshülse
- 9: Bolzen oder Verbindungsstück
- 10: Längsschlitz
- 11: Rändelung oder Profilierung
- 12: Einkerbung
- 13: Bolzen oder Verbindungsstück
- 14: Bolzenabschnitt
- 15: Bund
- 16: C-Profilabschnitt
- 17: Verbindungshülse
- 18: Befestigungsabschnitt
- 18.1: Linie
- 19, 20: Verbindungshülse
- 21: Bolzen oder Verbindungsstück
- VA: Verbindungsstückachse

## Patentansprüche

1. Wischarm für Wischanlagen von Fahrzeugen, insbesondere Straßenfahrzeugen, mit einem über eine Verbindung (7, 7a, 7b, 7d, 7e) an einem Ende einer im Querschnitt rechteckförmigen oder U-profilförmigen Wischarmstange (2, 2a, 2b) befestigten Wischblattadapter (5, 5b, 5c, 5d, 5e), wobei der Wischblattadapter (5, 5b, 5c, 5d, 5e) zum Verbinden mit einem Wischblatt (6) ausgebildet ist und die Wischarmstange (2, 2a, 2b) bzw. das Gelenkstück (3) schwenkbar mit einem Gelenkträger (4) verbunden ist, welcher in bekannter Weise drehfest auf einer antreibbaren Wischerwelle befestigbar ist, wobei die Wischarmstange (2, 2a, 2b) bzw. das Gelenkstück (3) in bekannter Weise durch ein an dem Wischarm vorgesehenes Federelement gegen die zu wischende Scheibe belastbar ist,
wobei die Verbindung (7, 7a, 7b, 7d, 7e) über wenigstens ein Verbindungsstück (9, 9a, 13, 18, 21) realisiert ist, welches ein Bolzen ist, der an seiner Umfangsfläche rotationssymmetrisch zu der sich zwischen der Wischarmstange (2, 2a, 2b) und dem Wischblattadapter (5, 5b, 5c, 5d, 5e) erstreckenden Verbindungsstückachse (VA) ausgebildet ist, **dadurch gekennzeichnet daß** der an die Wischarmstange (2, 2a, 2b) anschließende Bolzen achsgleich mit der Achse des Endes der Wischarmstange angeordnet ist.

2. Wischarm nach Anspruch 1, **dadurch gekennzeichnet, dass** das Verbindungsstück (9, 9a, 13, 21) an dem Ende der Wischarmstange (2, 2a, 2b) unter Verwendung einer Verbindungshülse (8, 8a, 19) gehalten ist.

3. Wischarm nach Anspruch 2, **dadurch gekennzeichnet, dass** das Verbindungsstück (9, 9a, 13, 21) an dem Ende der Wischarmstange (2, 2a, 2b) durch Verpressen der Verbindungshülse (8, 8a, 19) gehalten ist.

4. Wischarm nach Anspruch 1, **dadurch gekennzeichnet, dass** das wenigstens eine Verbindungsstück (13) an dem Ende der Wischarmstange (2b) durch Verpressen oder Verformen der Wischarmstange (2b) im Bereich ihres mit dem Wischblattadapter (5b) zu verbindenden Endes gehalten ist.

5. Wischarm nach einem der vorhergehenden Ansprüche, **dadurch gekennzeichnet, dass** das wenigstens eine Verbindungsstück (9, 9a, 13, 21) an dem Wischblattadapter (5, 5b, 5c, 5d, 5e) befestigt ist.

6. Wischarm nach Anspruch 5, **dadurch gekennzeichnet, dass** das wenigstens eine Verbindungsstück (9, 9a, 21) am Wischblattadapter (5, 5c, 5d, 5e) unter Verwendung einer Verbindungshülse (8, 8a, 19) gehalten ist.

7. Wischarm nach Anspruch 6, **dadurch gekennzeichnet, dass** das wenigstens eine Verbindungsstück (9, 9a, 21) am Wischblattadapter (5, 5c, 5d, 5e) durch Verpressen der Verbindungshülse (8, 8a, 19) gehalten ist.

8. Wischarm nach Anspruch 5, **dadurch gekennzeichnet, dass** das wenigstens eine Verbindungsstück (13) am Wischblattadapter (5b) durch Verpressen oder Verformen eines Teils des Wischblattadapter (5b) gehalten ist.

9. Wischarm nach einem der vorhergehenden Ansprüche, **dadurch gekennzeichnet, dass** das Verbindungsstück (9, 9a, 13, 18, 21) eine kreiszylinderförmige Umfangsfläche aufweist.

10. Wischarm nach einem der vorhergehenden Ansprüche, **dadurch gekennzeichnet, dass** das Verbindungsstück (9, 9a, 13, 18, 21) einen sich wenigstens einmal entlang der Verbindungsstückachse (VA) ändernden Querschnitt aufweist.

11. Wischarm nach Anspruch 10, **dadurch gekennzeichnet, dass** das Verbindungsstück (9, 9a, 13, 18, 21) zumindest auf einer Teillänge eine kegelförmige oder kegelstumpfförmige Umfangsfläche aufweist.

## Claims

1. Wiper arm for windscreen wiper modules of vehicles, particularly road vehicles, having a wiper blade adapter (5, 5b, 5c, 5d, 5e) attached by means of a connection (7, 7a, 7b, 7d, 7e) to one end of a wiper arm rod (2, 2a, 2b) which is rectangular or in the shape of a U profile, wherein the wiper blade adapter (5, 5b, 5c, 5d, 5e) is designed for connection to a wiper blade (6) and the wiper arm rod (2, 2a, 2b) and the articulation piece (3) is pivotably connected to an articulation support (4), which is attachable in the well-known way in a torque-proof manner to a drivable wiper shaft, with the wiper arm rod (2, 2a, 2b) and the articulation piece (3) being loadable against the screen to be wiper by means of a spring element provided on the wiper arm., wherein the connection (7, 7a, 7b, 7d, 7e) is realised by means of at least one connecting piece (9, 9a, 13, 21), which is a bolt, designed on its circumferential surface rotationally symmetrical to the axis of the connecting piece (VA) extending between the wiper arm rod (2, 2a, 2b) and the wiper blade adapter (5, 5b, 5c, 5d, 5e), **characterised in that** the bolt adjacent to the wiper arm rod (2, 2a, 2b) is arranged in the same axis as the axis of the end of the wiper arm rod.

2. Wiper arm according to claim 1, **characterised in that** the connecting piece (9, 9a, 13, 21) is retained on the end of the wiper arm rod (2, 2a, 2b) by means of a connecting sleeve (8, 8a, 19).

3. Wiper arm according to claim 2, **characterised in that** the connecting piece (9, 9a, 13, 21) is retained on the end of the wiper arm rod (2, 2a, 2b) by pressing of the connecting sleeve (8, 8a, 19).

4. Wiper arm according to claim 1, **characterised in that** the at least one connecting piece (13) is retained on the end of the wiper arm rod (2b) by pressing or deforming the wiper arm rod (2b) in the area of its end to be connected to the wiper blade adapter (5b).

5. Wiper arm according to any of the above claims, **characterised in that that** at least one connecting piece (9, 9a, 13, 21) is attached to the wiper blade adapter (5, 5b, 5c, 5d, 5e).

6. Wiper arm according to claim 5, **characterised in that** the at least one connecting piece (9, 9a) is retained on the wiper blade adapter (5, 5c, 5d, 5e) by means of a connecting sleeve (8, 8a, 19).

7. Wiper arm according to claim 6, **characterised in that** the at least one connecting piece (9, 9a) is retained on the wiper blade adapter (5, 5c, 5d, 5e) by pressing the connecting sleeve (8, 8a, 19).

8. Wiper arm according to claim 5, **characterised in that** the at least one connecting piece (13) is retained on the wiper blade adapter (5b) by pressing or deforming a portion of the wiper blade adapter (5b).

9. Wiper arm according to any of the above claims, **characterised in that** the connecting piece (9, 9a, 13, 18, 21) presents a cylindrical circumferential surface.

10. Wiper arm according to any of the above claims, **characterised in that** the connecting piece (9, 9a, 13, 18, 21) presents a cross-section differing at least once along the axis of the connecting piece (VA).

11. Wiper arm according to claim 10, **characterised in that** the connecting piece (9, 9a, 13, 18, 21) presents a conical or frustoconical circumferential surface over at least a partial length.

## Revendications

1. Bras d'essuie-glace pour les systèmes d'essuie-glace des véhicules, en particulier des véhicules routiers, comportant un adaptateur de balai d'essuie-glace (5, 5b, 5c, 5d, 5e), qui est fixé par un assemblage (7, 7a, 7b, 7d, 7e) à une extrémité d'une tige (2, 2a, 2b) du bras d'essuie-glace ayant une section rectangulaire ou profilée en U, ledit adaptateur de balai d'essuie-glace (5, 5b, 5c, 5d, 5e) étant conçu pour être relié à un balai d'essuie-glace (6), et la tige (2, 2a, 2b) du bras d'essuie-glace étant reliée de manière pivotante à un support d'articulation (4) qui, de manière connue, peut être fixé de manière solidaire en rotation sur un arbre d'essuie-glace pouvant être actionné, ladite tige (2, 2a, 2b) du bras d'essuie-glace ou la pièce d'articulation (3) pouvant être sollicitées contre la vitre à essuyer, de manière connue, par un élément de ressort prévu sur le bras d'essuie-glace, sachant que l'assemblage (7, 7a, 7b, 7d, 7e) est réalisé par l'intermédiaire d'au moins une pièce d'assemblage (9, 9a, 13, 18, 21), qui est un boulon dont la surface périphérique est réalisée en symétrie de révolution par rapport à l'axe (VA) de la pièce d'assemblage qui s'étend entre la tige (2, 2a, 2b) du bras d'essuie-glace et l'adaptateur de balai d'essuie-glace (5, 5b, 5c, 5d, 5e), **caractérisé en ce que** le boulon adjacent à la tige (2, 2a, 2b) du bras d'essuie-glace est disposé avec son axe identique à l'axe de l'extrémité de la tige d'essuie-glace.

2. Bras d'essuie-glace selon la revendication 1, **caractérisé en ce que** la pièce d'assemblage (9, 9a, 13, 21) est maintenue à l'extrémité de la tige (2, 2a, 2b) du bras d'essuie-glace moyennant l'utilisation d'un manchon d'assemblage (8, 8a, 19).

3. Bras d'essuie-glace selon la revendication 2, **caractérisé en ce que** la pièce d'assemblage (9, 9a, 13, 21) est maintenue à l'extrémité de la tige (2, 2a, 2b) du bras d'essuie-glace par compression du manchon d'assemblage (8, 8a, 19).

4. Bras d'essuie-glace selon la revendication 1, **caractérisé en ce que** ladite au moins une pièce d'assemblage (13) est maintenue à l'extrémité de la tige (2b) du bras d'essuie-glace par compression ou déformation de la tige (2b) du bras d'essuie-glace dans la zone de son extrémité à relier à l'adaptateur de balai d'essuie-glace (5b).

5. Bras d'essuie-glace selon l'une quelconque des revendications précédentes, **caractérisé en ce que** ladite au moins une pièce d'assemblage (9, 9a, 13, 21) est fixée à l'adaptateur de balai d'essuie-glace (5, 5b, 5c, 5d, 5e).

6. Bras d'essuie-glace selon la revendication 5, **caractérisé en ce que** ladite au moins une pièce d'assemblage (9, 9a, 21) est maintenue sur l'adaptateur de balai d'essuie-glace (5, 5c, 5d, 5e) moyennant l'utilisation d'un manchon d'assemblage (8, 8a, 19).

7. Bras d'essuie-glace selon la revendication 6, **caractérisé en ce que** ladite au moins une pièce d'assemblage (9, 9a, 21) est maintenue sur l'adaptateur de balai d'essuie-glace (5, 5c, 5d, 5e) par compression du manchon d'assemblage (8, 8a, 19).

8. Bras d'essuie-glace selon la revendication 5, **caractérisé en ce que** ladite au moins une pièce d'assemblage (13) est maintenue sur l'adaptateur de balai d'essuie-glace (5b) par compression ou déformation d'une partie de l'adaptateur de balai d'essuie-glace (5b).

9. Bras d'essuie-glace selon l'une quelconque des revendications précédentes, **caractérisé en ce que** la pièce d'assemblage (9, 9a, 13, 18, 21) comporte une surface périphérique en forme de cylindre circulaire.

10. Bras d'essuie-glace selon l'une quelconque des revendications précédentes, **caractérisé en ce que** la pièce d'assemblage (9, 9a, 13, 18, 21) comporte une section qui varie au moins une fois le long de l'axe (VA) de la pièce d'assemblage.

11. Bras d'essuie-glace selon la revendication 10, **caractérisé en ce que** la pièce d'assemblage (9, 9a, 13, 18, 21) comporte, au moins sur une partie de sa longueur, une surface périphérique en forme de cône ou de cône tronqué.
